# EUROPÄISCHE PATENTSCHRIFT

(11) **EP 0 880 776 B1**
(45) Veröffentlichungstag und Bekanntmachung des Hinweises auf die Patenterteilung: **04.08.1999**
(21) Anmeldenummer: 97905038.2
(22) Anmeldetag: 17.02.1997
(51) Int. Cl.: G11B 5/845, G11B 5/848

(54) **VORRICHTUNG ZUM AUFTRAGEN MAGNETISIERBARER BINDEMITTELHALTIGER SCHICHTEN AUF EINEN UNMAGNETISCHEN SCHICHTTRÄGER MITTELS EINES EXTRUDERGIESSERS**
DEVICE FOR APPLYING MAGNETIZABLE BINDER-CONTAINING LAYERS TO A NON-MAGNETIC SUBSTRATE BY MEANS OF AN EXTRUSION CASTER
DISPOSITIF POUR APPLIQUER DES COUCHES MAGNETISABLES CONTENANT DES LIANTS SUR UN SUPPORT NON MAGNETIQUE A L'AIDE D'UN VERSEUR D'EXTRUDEUSE

(30) Priorität: 17.02.1996 DE 19605899
(43) Veröffentlichungstag der Anmeldung: 02.12.1998
(73) Patentinhaber: EMTEC Magnetics GmbH, 67059 Ludwigshafen (DE)
(72) Erfinder: NAGLER, Eberhard, D-81377 München (DE); WAGNER, Hans-Günter, D-67271 Neuleiningen (DE); BROTZ, Friedrich, D-67063 Ludwigshafen (DE)
(86) Internationale Anmeldenummer: EP9700747
(87) Internationale Veröffentlichungsnummer: WO9730443

(56) Entgegenhaltungen:
- WO-A-94/03890

## Beschreibung

Die Erfindung betrifft eine Vorrichtung zum Auftragen mindestens einer magnetisierbaren, Pigmente sowie polymere Bindemittel enthaltenden magnetischen Dispersion auf die Vorderseite eines linear bewegten unmagnetischen Schichtträgers mittels eines Extrudergießers, wobei die Öffnung des die Dispersion fördernden Schlitzes im wesentlichen der Polflächenkante eines benachbart der Rückseite des Schichtträgers angeordneten Magneten gegenübersteht.

Vorrichtungen der oben genannten gattungsmäßigen Art sind unter anderem aus der DE-B-19 07 212, der DE-A-42 26 139 sowie der deutschen Patentanmeldung Aktenzeichen P 44 43 896 der gleichen Anmelderin bekannt. Ein wesentlicher Vorteil dieser Gießanordnung besteht darin, daß die aufgetragene Dispersionsmenge lediglich von der zugeführten Dosierung abhängt, dagegen vom Abstand der Extruderöffnung zum Schichträger innerhalb gewisser Grenzen unabhängig ist. Wie aus dem Beispiel der bereits genannten DE-B-19 07 212 hervorgeht, sind damit ohne weiteres Begußgeschwindigkeiten von 100 m/min zu erzielen.

Neuerdings werden zur erhöhten Wirtschaftlichkeit der Beschichtung wesentlich höhere Beguß-Geschwindigkeiten gefordert, außerdem müssen die magnetischen Eigenschaften der so erzielten magnetischen Aufzeichnungsträger höheren Anforderungen genügen, insbesondere soll die Glätte der Oberfläche zur Erzielung eines konstanten Kontaktes zwischen dem Magnetkopf und dem magnetischen Aufzeichnungsträger verbessert werden.

Daher bestand die Aufgabe, ausgehend vom oben genannten Stand der Technik die Gießvorrichtung bezüglich dieser erforderlichen Eigenschaften zu verbessern.

Aufgabe der Erfindung war es also, auch bei hohen Gießgeschwindigkeiten, welche höher als 100 m/min, insbesondere höher als 500 m/min, liegen, einen über die Gießbreite einwandfreien Beguß mit einer möglichst glatten Oberfläche zu erhalten.

Wie aus der Figur 1 der DE-B-19 07 212 ohne weiteres zu entnehmen ist, gleitet der Schichtträger (6) an der Kante (3a) der Weicheisenleiste des Magneten (3) unmittelbar vorbei. Bei einem leichten Flattern des Schichtträgers sowie bei quer zur Bahnlaufrichtung welligem Schichtträger besteht demzufolge die Gefahr des Verkratzens der Rückseite des magnetischen Aufzeichnungsträgers, so daß Abrieb entsteht, der beim Aufwickeln des fertig begossenen Schichtträgers die mechanischen und magnetischen Eigenschaften verschlechtert.

Erfindungsgemäß wurde die Aufgabe gelöst mit einer Vorrichtung mit den im kennzeichnenden Teil des Anspruchs 1 genannten Merkmalen. Weitere Einzelheiten der Erfindung gehen aus den Unteransprüchen, der Beschreibung sowie den Zeichnungen hervor.

Mit der erfindungsgemäßen Vorrichtung konnte auch bei hohen Gießgeschwindigkeiten, insbesondere größer als 500 m/min ein über die Gießbreite einwandfreier Beguß mit einer sehr glatten Oberfläche erhalten werden. Durch den weiteren Einsatz eines Führungskörpers mit gekrümmter Führungsfläche konnte außerdem ein Verkratzen der Rückseite des Schichtträgers vermieden werden.

Nachfolgend wird die Erfindung anhand der Figuren näher erläutert und zwar stellt dar
- Figur 1: eine schematische Übersicht der erfindungsgemäßen Vorrichtung
- Figur 2 und Figur 3: Vergrößerungen von zwei unterschiedlichen Ausführungsformen ausgehend von Figur 1

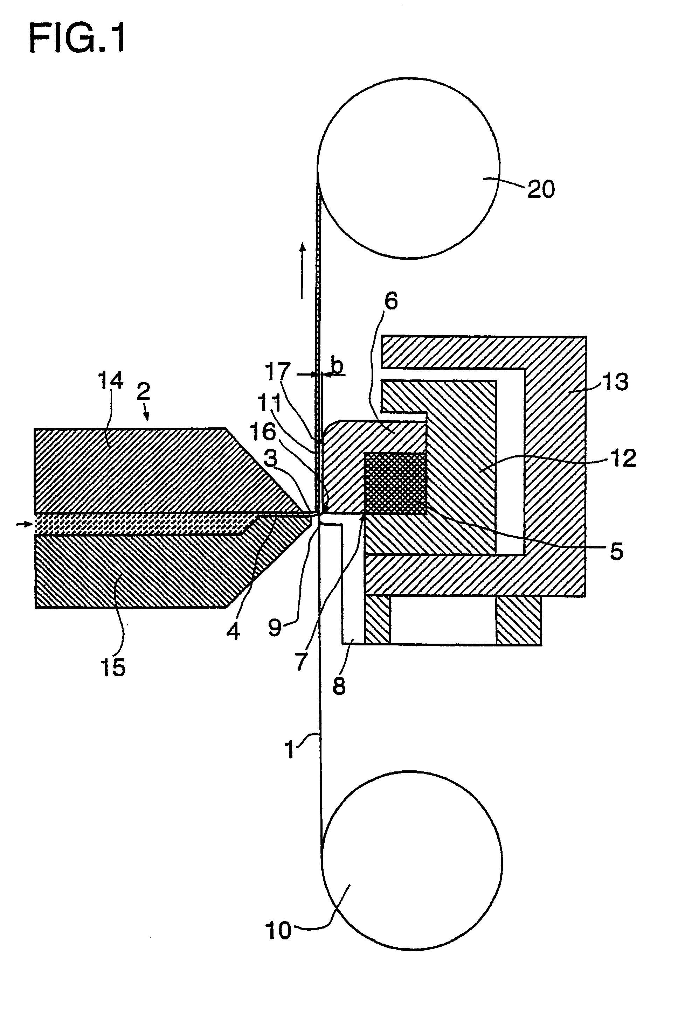

Figur 1 zeigt, daß der Schichtträger (1), welcher beispielsweise aus einer dünnen Polyethylentherphthalat-Folie besteht, die noch näher zu beschreibende Extruder-Gießanordnung zwischen zwei drehbar gelagerten Führungswalzen (10, 20) in Pfeilrichtung durchläuft. Der Extrudergießer-Kopf (2) besteht aus einem Oberteil (14) sowie einem Unterteil (15); zwischen beiden wird (in Pfeilrichtung eingezeichnet) die Dispersion durch den Gießerschlitz (4) mittels einer (nicht dargestellten) Dosiervorrichtung durch-transportiert und verläßt den Gießer durch die Öffnung (3). Die Dispersion wird als magnetisierbare Schicht (11) auf die Vorderseite des Schichtträgers (1) aufgetragen. Im wesentlichen gegenüberliegend der Extruderöffnung (3) befindet sich benachbart der Rückseite des Schichtträgers (1) ein im wesentlichen quaderförmiger Magnet (5), welcher so angeordnet ist, daß seine Magnetisierungsrichtung parallel zur Laufrichtung des Schichtträgers verläuft. Statt eines einzelnen Magneten können auch mehrere neben- oder übereinander angeordnete Magnete verwendet werden, bei denen jeweils ungleichnamige Pole aneinandergrenzen. Dieser Magnet ist vorzugsweise an zwei Seiten umschlossen von einer aus weichmagnetischem Material bestehenden Leiste (6), im folgenden als "Weicheisenleiste" bezeichnet, welche den Magneten im wesentlichen winkelig umgibt. Die der Gießeröffnung gegenüberliegende Einlauf-Kante (16) der Weicheisenleiste (6) hat einen Winkel von kleiner oder gleich 90°, während die stromabwärts gelegene (in Pfeilrichtung eingezeichnete) entgegengesetzte Kante (17) rechtwinklig, abgeschrägt oder abgerundet sein kann. Die Polflächenkante (7) des Magneten (5) liegt vorteilhaft in einer Ebene mit der Einlauf-Kante (16) der Weicheisenleiste (6).

Die genannte Magnetanordnung sitzt in einem aus unmagnetischem Material bestehenden Block (12, 13). Wie auch aus dem nachfolgenden Beispiel hervorgeht, hat sich gezeigt, daß durch diese gegenüber dem Stand der Technik abgeänderte Magnetanordnung eine wesentlich glattere Oberfläche erzielt werden kann, als sie die vorgenannten Vorrichtungen erzielen können.

Um des weiteren ein Verkratzen der Rückseite des Schichtträgers zu vermeiden, ist der Weicheisenleiste (6) ein im wesentlichen mit dieser bündig abschließender Führungskörper (8) vorgelagert, welcher aus nicht magnetischem Material besteht und bei der die an die Kante (16) der Weicheisenleiste (6) angrenzende Führungsfläche (9) abgerundet ist.

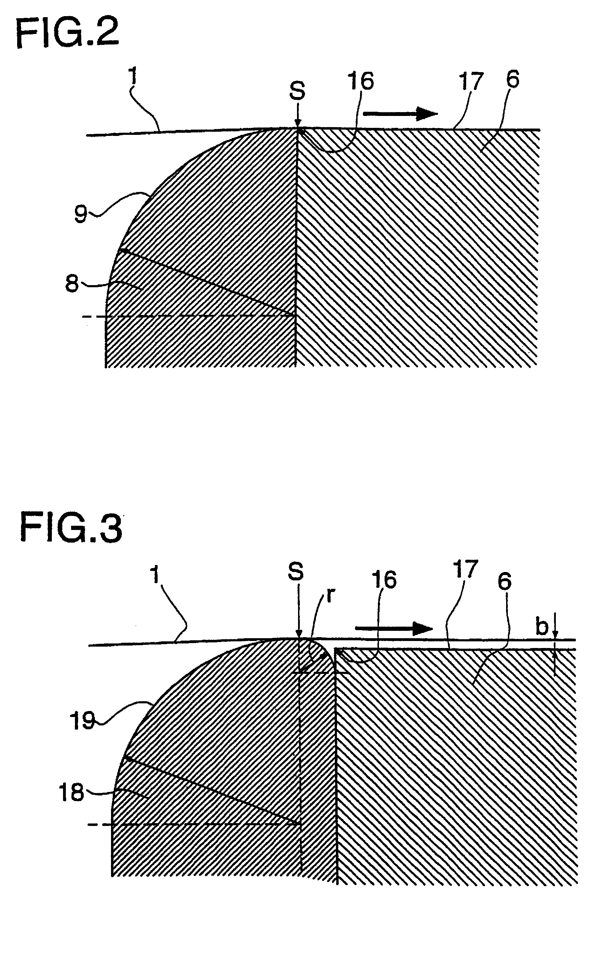

Wie aus den Figuren 2 und 3, welche Vergrößerungen der Figur 1 darstellen, hervorgeht, ist die Position der Führungsflächen (9, 19) der entsprechenden Führungskörper (8, 18) in Bezug auf die der Rückseite des Schichtträgers gegenüberstehenden Abschluß- oder Endfläche (17) der Weicheisenleiste (6) so gestaltet, daß der höchste Punkt S der Führungsfläche (9, 19) entweder bündig mit der Fläche (17) abschließt (Figur 2) oder über diese geringfügig übersteht (Figur 3). Bei beiden Anordnungen hat sich gezeigt, daß ein Verkratzen der Schichtträger-Rückseite zuverlässig vermieden wird; möglicherweise ist diese Verbesserung auf einen dünnen Luftfilm zurückzuführen, welchen die Rückseite des Schichtträgers (1) mit sich führt und den die Führungsflächen (9, 19) so leiten, daß die Rückseite des Schichtträgers auf dem Führungskörper (8, 18) sowie nachfolgend auf der Abschlußfläche (17) der Weicheisenleiste (6) schwimmt.

Im Falle der Figur 3 ist der Führungskörper (18) so geformt, daß sein Radius in Richtung stromabwärts entweder kontinuierlich oder ausgehend von seinem Scheitelpunkt S sprunghaft abnimmt. Diese Führungsfläche (19) endet dann in einem kleinen Spalt zwischen Führungskörper (18) und Weicheisenleiste (6). Da der Scheitelpunkt S des Führungskörpers (18) in Bezug auf den Schichtträger (1) höher liegt, als die Abschlußfläche (17) der Weicheisenleiste (6), ergibt sich dadurch ein gewisser minimaler Abstand b zwischen Weicheisenleiste und Rückseite der Folie (1). Im Fall der Figur 2 ist dieser Abstand b noch minimaler und besteht nur aus dem oben erwähnten Luftfilm. Der Abstand ist gegeben unter anderem durch den Folienzug des Schichtträgers (1) zwischen den beiden Führungswalzen (10, 20).

Der Abstand zwischen Extruderöffnung (3) und Schichtträger (1) kann in weiten Grenzen variiert werden, beispielsweise zwischen 0,5 bis 5 mm. Ebenso kann die Trockenschichtdicke der magnetisierbaren Schicht (11) zwischen 0,5 bis 20 µm betragen. Der Folienzug des Schichtträgers (1) zwischen den beiden Führungswalzen beträgt im allgemeinen zwischen 20 bis 100 N. Das Material des Magneten, vorzugsweise eines Permanentmagneten, ist quaderförmiges Bariumferrit oder ein aus SmcCOy Nd-Fe-B bestehender Magnet. Im verwendeten Fall betrugen die Dimensionen des Magneten (5) 20 x 19 mm, die Länge des Magneten entsprach der Begußbreite, im vorliegenden Fall ist die Gesamtlänge 700 mm. Die Dicke der Weicheisenleiste beträgt zwischen 5 und 15 mm. Es kann sich dabei auch um härtbaren Stahl handeln. Als Material der Führungsfläche hat sich weitgehend Aluminium bewährt, welches mit einer dünnen Verschleißschutzschicht überzogen wurde, beispielsweise bestehend aus CrN oder einem Metall, beispielsweise Nickel. Die Rauhigkeit Rₜ der Führungsflächen (9, 19) soll nicht größer als 1 µm, vorzugsweise nicht größer als 0,5 µm, betragen. Die Koerzitivkraft des Magneten (5) ist so dimensioniert, daß die Feldstärke an der Polflächenkante (9) abhängig von der Koerzitivkraft der magnetisierbaren Pigmente der magnetischen Dispersion im allgemeinen zwischen 1000 und 4000 A/cm beträgt.

### Beispiel

Eine magnetische Dispersion der folgenden Zusammensetzung wurde hergestellt.

| | Gewichtsteile |
|---|---|
| Co-dotiertes Fe₂O₃ mit H_{c} 60 kA/m und 25 m²/g BET-Wert | 122 |
| Polyharnstoff (meth)acrylat | 7 |
| Vinyl copolymer | 6 |
| Polyester-Polyurethan | 15 |
| Nitrocellulose | 4 |
| Ruß | 11 |
| AI₂O₃ feinteilig | 12 |
| Gleitmittel | 8 |
| Netzmittel | 0,12 |
| Lösemittelgemisch (THF/Dioxan) | 750 |
| Härtungsmittel Diisocyanat | 9 |

Diese Dispersion wurde auf einen unmagnetischen Polyethylentherphthalat-Schichtträger, welcher eine Dicke von 15 µm hatte, mit einer Begußgeschwindigkeit von 750 m/min gegossen, wobei die Dispersion eine Trockenschichtdicke von 2,5 µm ergab. Die Anordnung der Führungsfläche war so wie in Figur 3 dargestellt, wobei der Überstand b zwischen Scheitelpunkt S und Abschluß- oder Führungsfläche 17 kleiner als 0,5 mm betrug. Der Folienzug betrug 80 N; das Magnetfeld an der Polflächenkante hatte einen Betrag von 2500 A/cm.

### Vergleichsbeispiel

Es wurde verfahren wie im Beispiel, jedoch war die magnetische Anordnung sowie in der DE-PS 19 07 212, Figur 1, dargestellt.

### Ergebnisse

Die so hergestellten magnetischen Aufzeichnungsträger wurden in 12,7 mm (Halbzoll) Breite zur Herstellung eines kommerziellen Videobandes für das VHS-System geschnitten. Die folgende Tabelle zeigt, daß der mit der erfindungsgemäßen Vorrichtung hergestellte magnetische Aufzeichnungsträger bezuglich Rauhigkeit (Ra) der Oberfläche, Rf-Pegel sowie FSM-Signal gegenüber dem mit der konventionellen Anordnung hergestellten verbessert war.

**Tabelle**

| | Ra (1) | Ra (2) | RF-Pegel | FSM | Verkratzung |
|---|---|---|---|---|---|
| Beispiel | 11,6 nm | 7,0 nm | + 1dB | + 2,5 dB | O |
| Vergleichsbeispiel | 18,5 nm | 8,5 nm | 0 | | 1 - 2 |

Anmerkungen:
0 = keine Kratzer
1 = zunehmende
. Anzahl
. von Kratzern
6 = völlig verkratzt

Die Ra(1)-Werte wurden ohne eine zwischen der Begußvorrichtung und der nachfolgenden Trockenstrecke angeordneten aus dem Stand der Technik bekannten Glätteinrichtung bestimmt.

Die Ra(2) -Werte wurden mit Glätteinrichtung erhalten.

Die Erfindung betrifft eine Vorrichtung zum Auftragen bindemittelhaltige Schichten auf einen unmagnetischen Schichtträger mittels eines Extrudergießers.

Ein magnetischer Aufzeichnungsträger mit verbesserten mechanischen sowie magnetischen Eigenschaften wird dadurch erhalten, daß der Öffnung (3) eines Extrudergießers (2) ein sogenannter Ziehmagnet (5) gegenübersteht, der mit einer Weicheisenleiste (6) winkelig abgedeckt ist. Zwischen Magnet und Öffnung des Extrudergießers wird zwischen zwei Führungswalzen der Schichtträger geführt. Die Polung des Magneten ist parallel zur Laufrichtung des Schichtträgers ausgerichtet, wobei die Position des Magneten und der Weicheisenleiste so beschaffen ist, daß die (stromaufwärts angeordnete) Einlaufkante (16) im wesentlichen gegenüberliegend der Öffnung des Extrudergießers angeordnet ist. Dieser Kante kann ein Führungskörper (8) mit einer gekrümmten Führungsfläche (9) vorgeschaltet sein, welche in Bezug auf die Weicheisenleiste so angeordnet ist, daß sich ein minimaler Abstand zwischen Rückseite des Schichtträgers und der Abschlußfläche (17) der Leiste (6) einstellt.

Damit lassen sich magnetische Aufzeichnungsträger unter hoher Auftragsgeschwindigkeit und beidseitiger ausgezeichneter Oberflächenbeschaffenheit herstellen.

## Patentansprüche

1. Vorrichtung zum Auftragen mindestens einer magnetisierbaren, Pigmente, sowie polymere Bindemittel enthaltenden Dispersion auf die Vorderseite eines linear bewegten unmagnetischen Schichtträgers (1) mittels eines Extrudergießers (2), wobei die Öffnung (3) des die magnetische Dispersion fördernden Schlitzes (4) im wesentlichen der Polflächenkante eines benachbart zur Rückseite des Schichtträgers angeordneten Magneten (5) gegenübersteht, dadurch gekennzeichnet, daß die Magnetisierungsrichtung (NS) des Magneten (5) parallel zur Laufrichtung des Schichtträgers (1) verläuft und daß der Magnet mit einer weichmagnetischen Leiste (6) abgedeckt ist, wobei die stromaufwärts gegen die Laufrichtung des Schichtträgers weisende Polflächenkante (7) des Magneten (5) bündig mit der Einlaufkante (16) der Weicheisenleiste (6) abschließt und wobei die Leiste (6) den Magneten (5) mindestens an zwei Seiten winkelig umschließt.

2. Vorrichtung nach Anspruch 1, dadurch gekennzeichnet, daß der weichmagnetischen Leiste (6) stromaufwärts ein schichtmagnetischer Führungskörper (8, 18) für den Schichtträger (1) vorgeschaltet ist, dessen Führungsfläche (9, 19) gekrümmt ist und wobei die Führungsfläche (9, 19) den Schichtträger mit einem minimalen Abstand (b) über der Endfläche (17) der weichmagnetischen Leiste (6) führt.

3. Vorrichtung nach Anspruch 2, dadurch gekennzeichnet, daß der Scheitel S der gekrümmten Führungsfläche (9, 19) höchstens in einem Abstand von ≤ 0,5 mm über der Endfläche (17) der Weicheisenleiste (6) liegt.

4. Vorrichtung nach Anspruch 2 oder 3, dadurch gekennzeichnet, daß der Krümmungsradius (r) der Führungsfläche (19) stromabwärts in Laufrichtung des Schichtträgers abnimmt.

5. Vorrichtung nach den Ansprüchen 2, 3 oder 4, dadurch gekennzeichnet, daß die Führungsfläche (9, 19) eine Verschleißschutzschicht besitzt.

6. Vorrichtung nach einem der Ansprüche 2 bis 5, dadurch gekennzeichnet, daß die Führungsfläche (9, 19) mit Metall überzogen ist.

7. Vorrichtung nach einem der Ansprüche 2 bis 6, dadurch gekennzeichnet, daß die Führungsfläche eine Rauhigkeit Rₜ ≤ 1 µm, insbesondere von Rₜ ≤ 0,5 µm besitzt.

## Claims

1. Apparatus for applying at least one magnetizable dispersion containing pigments and polymeric binders to the front of a linearly transported nonmagnetic substrate (1) by means of an extrusion coater (2), the orifice (3) of the slot (4) transporting the magnetic dispersion being essentially opposite the edge of the pole surface of a magnet (5) arranged adjacent to the back of the substrate, wherein the magnetization direction (NS) of the magnet (5) is parallel to the running direction of the substrate (1) and the magnet is covered with a magnetically soft strip (6), that edge (7) of the pole surface of the magnet (5) which faces upstream against the running direction of the substrate being flush with the leading edge (16) of the soft iron strip (6) and the strip (6) enclosing the magnet (5) at least on two sides in an angular manner.

2. Apparatus as claimed in claim 1, wherein a nonmagnetic guide element (8, 18) for the substrate (1), whose guide surface (9, 19) is curved, is present upstream of the magnetically soft strip (6), the guide surface (9, 19) guiding the substrate at a minimum distance (b) above the end surface (17) of the magnetically soft strip (6).

3. Apparatus as claimed in claim 2, wherein the summit S of the curved guide surface (9, 19) is at most a distance of ≤ 0.5 mm above the end surface (17) of the soft iron strip (6).

4. Apparatus as claimed in claim 2 or 3, wherein the radius of curvature (r) of the guide surface (19) decreases downstream with respect to the running direction of the substrate.

5. Apparatus as claimed in claim 2, 3 or 4, wherein the guide surface (9, 19) has a hard-wearing protective layer.

6. Apparatus as claimed in any of claims 2 to 5, wherein the guide surface (9, 19) is covered with metal.

7. Apparatus as claimed in any of claims 2 to 6, wherein the guide surface has a roughness Rₜ of ≤ 1 µm, in particular ≤ 0.5 µm.

## Revendications

1. Dispositif d'application d'au moins un pigment magnétisable, ainsi que d'une dispersion contenant des liants polymères, sur la face avant d'un support de couche (1) non magnétique soumis à un déplacement linéaire, au moyen d'un fondeur-extrudeur (2), l'ouverture (3) de la fente (4) servant au passage de la dispersion magnétique étant placée sensiblement en face de l'arête de la surface polaire d'un aimant (5) disposé au voisinage de la face arrière du support de couche, caractérisé par le fait que le dispositif de magnétisation (NS) de l'aimant (5) est placé parallèlement à la direction de défilement du support de couche (1) et que l'aimant est recouvert d'une bande (6) à magnétisme doux, l'arête de face polaire (7) tournée, en amont du courant, à l'encontre de la direction de défilement du support de couche, de l'aimant (5) étant en affleurement avec l'arête d'entrée (16) de la bande (6) en fer doux et la bande (6) entourant l'aimant (5) de façon anguleuse au moins sur deux côtés.

2. Dispositif selon la revendication 1, caractérisé par le fait que, en amont de la bande (6) à magnétisme doux, est mis en circuit à l'avant un corps de guidage (8, 18) à magnétisme par couches, pour le support de couche (1), dont la face de guidage (9, 19) est incurvée et la face de guidage (9, 19) guidant le support de couche avec un espacement (b) minimal au-dessus de la face d'extrémité (17) de la bande (6) à magnétisme doux.

3. Dispositif selon la revendication 2, caractérisé par le fait que le sommet S de la surface de guidage (9, 19) incurvée est situé au maximum à une distance = 0,5 mm au-dessus de la surface d'extrémité (17) de la bande (6) en fer doux.

4. Dispositif selon la revendication 2 ou 3, caractérisé par le fait que le rayon de courbure (r) de la face de guidage (19) va en diminuant en aval, en allant dans la direction de défilement du support de couche.

5. Dispositif selon les revendications 2, 3 ou 4, caractérisé par le fait que la face de guidage (9, 19) a une couche de protection contre l'usure.

6. Dispositif selon l'une des revendications 2 à 5, caractérisé par le fait que la face de guidage (9, 19) est revêtue de métal.

7. Dispositif selon l'une des revendications 2 à 6, caractérisé par le fait que la face de guidage a une rugosité Rₜ = 1 µm, en particulier de Rₜ = 0,5 µm.
